# EUROPÄISCHE PATENTANMELDUNG

(11) **EP 2 011 809 A1**
(43) Veröffentlichungstag der Anmeldung: **07.01.2009**
(21) Anmeldenummer: 07111647.9
(22) Anmeldetag: 03.07.2007
(51) Int. Cl.: C08G 18/10, C08G 18/28, C09J 175/04, C09K 3/10

(54) **Polyurethanzusammensetzung enthaltend tertiäre Amine und Anhydridosilane**

(71) Anmelder: Sika Technology AG, 6340 Baar (CH)
(72) Erfinder: Erdelt, Sabine, 8049, Zürich (CH); Schlumpf, Michael, 8953, Dietikon (CH); Burckhardt, Urs, 8049, Zürich (CH)
(74) Vertreter: Sika Patent Attorneys

(57) **Zusammenfassung**

Die vorliegende Erfindung betrifft Polyurethanzusammensetzungen, welche auf Isocyanatgruppen aufweisenden Polyurethanpolymeren basieren und mindestens ein tertiäres Amin sowie ein Anhydridosilan enthalten.

Derartige Zusammensetzungen eignen sich insbesondere als elastische Klebstoffe, Dichtstoffe und Beschichtungen für Glas und keramische Substrate. Sie zeichnen sich dadurch aus, dass sie bei optimalen Hafteigenschaften in einem breiten Temperaturbereich, einschliesslich des Tieftemperaturbereichs, anwendbar sind und zudem eine sehr gute Lagerstabilität aufweisen.

## Beschreibung

### Technisches Gebiet

Die Erfindung betrifft das Gebiet der Polyurethanzusammensetzungen, welche insbesondere als elastische Klebstoffe, Dichtstoffe und Beschichtungen auf Glas oder keramischen Substraten eingesetzt werden.

### Stand der Technik

Zusammensetzungen, welche auf Isocyanatgruppen aufweisenden Polyurethanpolymeren basieren, werden seit geraumer Zeit als elastische Klebstoffe, Dichtstoffe und Beschichtungen eingesetzt. Zur Verbesserung ihrer Haftung auf unterschiedlichen Untergründen werden sie üblicherweise in Kombination mit Haftvermittlerzusammensetzungen, so genannten Haftvoranstrichen oder Primern, verwendet. Diese enthalten als haftvermittelnde Substanzen sehr oft Organosilane, welche an einem Kohlenwasserstoffrest eine gegenüber den Isocyanatgruppen des Polyurethanpolymers reaktive funktionelle Gruppe, beispielsweise eine Amino- oder eine Mercaptogruppe, aufweisen. Solche Organosilane enthaltenden Haftvermittlerzusammensetzungen sind beispielsweise beschrieben in WO 2005/059056 A1 und eignen sich insbesondere für die Verbesserung der Haftung von Polyurethanzusammensetzungen auf Glas und/oder keramischen Untergründen.

Aus unterschiedlichen Gründen kann es jedoch notwendig oder von bedeutendem Vorteil sein, bei der Anwendung von Polyurethanzusammensetzungen auf Haftvermittlerzusammensetzungen in Form von Voranstrichen zu verzichten. Damit dennoch keine Haftungseinbussen auftreten, werden diesen Zusammensetzungen haftvermittelnde Substanzen, insbesondere eines oder mehrere Organosilane zugesetzt. Dabei werden solche Organosilane eingesetzt, deren funktionelle Gruppen bei Raumtemperatur nicht reaktiv gegenüber den in den Polyurethanzusammensetzungen vorhandenen Isocyanatgruppen sind, da die Organosilane sonst vorzeitig mit dem Polyurethanpolymer reagieren und in der Folge ihre haftvermittelnden Eigenschaften verlieren und/oder die Zusammensetzung gar zur Aushärtung bringen können. Aufgrund dieser Problematik ist die Auswahl an möglichen Organosilanen stark eingeschränkt. Für die Haftung auf Glas oder keramischen Substraten wurden bisher erfolgreich insbesondere Epoxysilane eingesetzt.

Um die Aushärtungsreaktion von Isocyanatgruppen aufweisenden Polyurethanpolymeren zu beschleunigen, beziehungsweise um die Aushärtung auch im Tieftemperaturbereich zu ermöglichen, werden in derartigen Polyurethanzusammensetzungen typischerweise tertiäre Amine als Katalysatoren eingesetzt. Ein bedeutender Nachteil solcher Systeme stellt die schlechte Verträglichkeit von Epoxysilanen mit tertiären Aminkatalysatoren dar, welche dazu führt, dass die Zusammensetzungen bereits bei der Lagerung und oftmals noch innerhalb der angegebenen Verwendungsdauer der Zusammensetzung aushärten können.

### Darstellung der Erfindung

Aufgabe der vorliegenden Erfindung ist es daher, Zusammensetzungen basierend auf Isocyanatgruppen aufweisenden Polyurethanpolymeren zur Verfügung zu stellen, welche in Anwesenheit von tertiären Aminkatalysatoren eine hohe Lagerstabilität sowie eine gute Haftung auf Glas und keramischen Substraten aufweisen, wobei diese Substrate nicht mittels Voranstrichen vorbehandelt wurden.

Überraschenderweise wurde nun gefunden, dass Zusammensetzungen gemäss Anspruch 1 diese Aufgabe lösen.

Die erfindungsgemässen Zusammensetzungen weisen eine sehr gute Lagerstabilität und eine gute Haftung, insbesondere auf Glas und keramischen Substraten, auf. Sie können in einem sehr breiten Temperaturbereich, insbesondere auch im Tieftemperaturbereich, beispielsweise im Bereich von -10 bis +10 °C, appliziert werden.
Weitere Aspekte der Erfindung sind Gegenstand weiterer unabhängiger Ansprüche. Besonders bevorzugte Ausführungsformen der Erfindung sind Gegenstand der abhängigen Ansprüche.
Wege zur Ausführung der Erfindung

Gegenstand der vorliegenden Erfindung sind Zusammensetzungen enthaltend
a) mindestens ein Isocyanatgruppen aufweisendes Polyurethanpolymer P,
b) mindestens ein tertiäres Amin,
c) mindestens ein Silan der Formel (I).

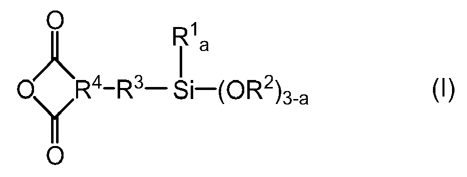

Der Rest R¹ steht hierbei für eine Alkylgruppe mit 1 bis 8 C-Atomen, insbesondere für eine Methyl- oder für eine Ethylgruppe.

Der Rest R² steht für eine Alkylgruppe mit 1 bis 5 C-Atomen, insbesondere für eine Methyl-, für eine Ethyl- oder für eine Isopropylgruppe.

R³ steht für eine lineare oder verzweigte, gegebenenfalls cyclische, Alkylengruppe mit 1 bis 20 C-Atomen, gegebenenfalls mit aromatischen Anteilen und gegebenenfalls mit Heteroatomen, insbesondere für eine Alkylengruppe mit 3 C-Atomen.

R⁴ steht für einen dreiwertigen Kohlenwasserstoffrest mit 2 bis 5, insbesondere mit 2, C-Atomen.
a steht für einen Wert von 0 oder 1, insbesondere für 0.

Meist bevorzugt sind Silane der Formel (I), bei welchen R² für eine Methyl- oder für eine Ethylgruppe steht, R³ für eine Alkylengruppe mit 3 C-Atomen steht, R⁴ für einen dreiwertigen Kohlenwasserstoffrest mit 2 C-Atomen steht und a für einen Wert von 0 steht.

Das Silan der Formel (I) stellt ein Anhydridosilan dar und ist beispielsweise unter dem Handelsnamen Geniosil^{®} GF 20 von der Firma Wacker, Deutschland, kommerziell erhältlich.

Mit "Poly" beginnende Substanznamen wie beispielsweise Polyisocyanat, Polyurethan, Polyester, Polyharnstoff, Polyol oder Polycarbonat, bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem Düsocyanat-Polyadditions-Verfahren hergestellt werden. Dies schliesst auch solche Polymere ein, die nahezu oder gänzlich frei sind von Urethangruppen. Beispiele für Polyurethanpolymere sind Polyester-Polyurethane, Polyether-Polyurethane, Polyurethan-Polyharnstoffe, Polyharnstoffe, Polyester-Polyharnstoffe, Polyisocyanurate oder Polycarbodiimide.

Mit dem Begriff "Silan" werden im vorliegenden Dokument Organoalkoxysilane bezeichnet, in denen zum einen zwei oder drei Alkoxygruppen direkt, über eine Si-O-Bindung, an das Silicium-Atom gebunden sind, und die zum anderen einen oder zwei direkt, über eine Si-C-Bindung, an das Silicium-Atom gebundenen organischen Rest aufweisen, welcher eine funktionelle Gruppe darstellt oder eine solche trägt. Die Silane haben die Eigenschaft, bei Kontakt mit Feuchtigkeit zu hydrolysieren. Dabei bilden sich Organosilanole und, durch nachfolgende Kondensationsreaktionen, Organosiloxane.

Die Zusammensetzung enthält mindestens ein Isocyanatgruppen aufweisendes Polyurethanpolymer P, welches typischerweise aus mindestens einem Polyisocyanat und mindestens einem Polyol hergestellt wird. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.5 bis 5, insbesondere eines von 1.8 bis 3, eingehalten wird. Unter dem NCO/OH-Verhältnis wird hierbei das Verhältnis der Anzahl der eingesetzten Isocyanatgruppen zu der Anzahl der eingesetzten Hydroxylgruppen verstanden. Bevorzugt verbleibt im Polyurethanpolymer P nach der Umsetzung aller Hydroxylgruppen des Polyols ein Gehalt an freien Isocyanatgruppen von 0.5 bis 15 Gew.-%, besonders bevorzugt von 1.0 bis 10 Gew.-%.

Als Polyisocyanate für die Herstellung eines Polyurethanpolymers P können handelsübliche aliphatische, cycloaliphatische oder aromatische Polyisocyanate, insbesondere Diisocyanate, verwendet werden.
Beispielsweise sind das Diisocyanate, deren Isocyanatgruppen an jeweils ein aliphatisches, cycloaliphatisches oder arylaliphatisches C-Atom gebunden sind, auch "aliphatische Diisocyanate" genannt, wie 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethylcyclohexan (=Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin; sowie Diisocyanate mit an jeweils ein aromatisches C-Atom gebundenen Isocyanatgruppen, auch "aromatische Diisocyanate" genannt, wie 2,4- und 2,6-Toluylendiisocyanat (TDI), 4,4'-, 2,4'-und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.
Für die Formulierung von lichtstabilen Zusammensetzungen sind aliphatische Diisocyanate bevorzugt, insbesondere HDI und IPDI.
Von den aromatischen Diisocyanaten bevorzugt sind MDI und TDI.

Als Polyole für die Herstellung eines Polyurethanpolymers P können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, kürzerkettigen Polyetherpolyolen sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten;
- Styrol-Acrylnitril- oder Acrylnitril-Methylmethacrylat-gepfropfte Polyetherpolyole;
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind;
- Polyacrylat- und Polymethacrylatpolyole;
- Polykohlenwasserstoffpolyole, auch Oligohydrocarbonole genannt, wie beispielsweise polyhydroxyfunktionelle Ethylen-Propylen-, Ethylen-Butylen-oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können;
- Polyhydroxyfunktionelle Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar^{®} CTBN von Emerald Performance Materials, LLC., USA) hergestellt werden können.

Besonders geeignet sind Polyoxyalkylendiole oder Polyoxyalkylentriole, insbesondere Polyoxypropylendiole oder Polyoxypropylentriole.

Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.

Ebenfalls besonders geeignet sind Polytetrahydrofurandiole.

Diese genannten Polyole weisen bevorzugt ein mittleres Molekulargewicht von 250 - 30'000 g/mol, insbesondere von 400 - 8'000 g/mol, und eine mittlere OH-Funktionalität im Bereich von 1.7 bis 3 auf.

Zusätzlich zu diesen genannten Polyolen können kleine Mengen von niedrigmolekularen zwei- oder mehrwertigen Alkoholen wie beispielsweise 1,2-Ethandiol, 1,3- und 1,4-Butandiol, 1,2- und 1,3-Propandiol, Neopentylglykol, Diethylenglykol, Triethylenglykol, die isomeren Dipropylenglykole und Tripropylenglykole, die isomeren Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung eines Polyurethanpolymers P mitverwendet werden. Ebenso können kleine Mengen an Polyolen mit einer mittleren OH-Funktionalität von mehr als 3 mitverwendet werden, beispielsweise Zuckerpolyole.

Weiterhin weist die Zusammensetzung mindestens ein tertiäres Amin auf. Solche tertiären Amine sind insbesondere ausgewählt aus der Gruppe bestehend aus Triethylamin, Tributylamin, N-Ethyl-diisopropylamin, N,N,N',N'-Tetramethyl-ethylendiamin, Pentamethyl-diethylentriamin und höhere Homologe davon, N,N,N',N'-Tetramethyl-propylendiamin, Pentamethyldipropylentriamin und höhere Homologe davon, N,N,N',N'-Tetramethyl-1,3-butandiamin, N,N,N',N'-Tetramethyl-1,6-hexandiamin, Bis-(dimethylamino)-methan, N,N-Dimethylbenzylamin, N,N-Dimethylcyclohexylamin, N-Methyldicyclohexylamin, N,N-Dimethyl-hexadecylamin, Bis-(N,N-diethylaminoethyl)-adipat, N,N-Dimethyl-2-phenylethylamin, Tris-(3-dimethylaminopropyl)-amin, 1,4-Diazabicyclo[2.2.2]octan (DABCO), 1,8-Diazabicyclo[5.4.0]undec-7-en (DBU), 1,5-Diazabicyclo[4.3.0]non-5-en (DBN), N-Methylmorpholin, N-Ethylmorpholin, N-Cocomorpholin, N,N'-Dimethylpiperazin, N-Methyl-N'-dimethylaminoethyl-piperazin, Bis-(dimethylaminoethyl)-piperazin, 1,3,5-Tris-(dimethylaminopropyl)-hexahydrotriazin oder Bis-(2-dimethylaminoethyl)-ether; stickstoffaromatische Verbindungen wie 4-Dimethylamino-pyridin, N-Methylimidazol, N-Vinylimidazol oder 1,2-Dimethylimidazol; Amidine und Guanidine ohne aktive Wasserstoffgruppen, wie 1,1,3,3-Tetramethylguanidin, sowie Dimorpholinoether der Formel (II).

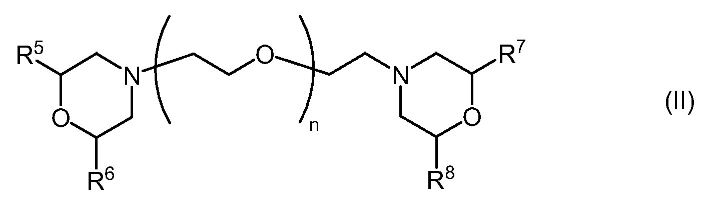

Die Reste R⁵, R⁶, R⁷ und R⁸ stehen hierbei unabhängig voneinander für Wasserstoffatome, Methyl- oder Ethylgruppen und n steht für einen Wert von 1 bis 10, insbesondere von 1 bis 5.

Bevorzugt ist das tertiäre Amin ausgewählt aus der Gruppe bestehend aus 1,4-Diazabicyclo[2.2.2]octan (DABCO), 1,8-Diazabicyclo[5.4.0]undec-7-en (DBU), 1,5-Diazabicyclo[4.3.0]non-5-en (DBN) und Dimorpholinoether der Formel (II).

Meist bevorzugt als tertiäres Amin der Formel (II) ist 2,2'-Dimorpholinodiethylether (DMDEE).

Besonders bevorzugt enthält die Zusammensetzung 3-(Trimethoxy-silyl)propylbernsteinsäureanhydrid oder 3-(Triethoxysilyl)propylbernsteinsäure-anhydrid als Silan der Formel (I) und 2,2'-Dimorpholinodiethylether (DMDEE) als tertiäres Amin.

Der Anteil des Silans der Formel (I) an der gesamten Zusammensetzung beträgt vorzugsweise 0.05 bis 5 Gew.-%, insbesondere 0.1 bis 2.5 Gew.-%.

Der Anteil des tertiären Amins an der gesamten Zusammensetzung beträgt vorzugsweise 0.05 bis 3 Gew.-%, insbesondere 0.1 bis 2 Gew.-%.

Vorzugsweise weist die Zusammensetzung weiterhin einen Füllstoff auf. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearaten, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black; im Folgenden als "Russ" bezeichnet), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 80 Gew.-%, bevorzugt 15 bis 60 Gew.-%, bezogen auf die gesamte Zusammensetzung.

Weiterhin kann die Zusammensetzung ein Lösungsmittel enthalten, wobei darauf zu achten ist, dass dieses Lösungsmittel keine mit Isocyanatgruppen reaktive Gruppen aufweist, insbesondere keine Hydroxylgruppen und keine anderen Gruppen mit aktivem Wasserstoff.

Geeignete Lösungsmittel sind insbesondere ausgewählt aus der Gruppe bestehend aus Ketonen, Estern, Ethern, aliphatischen und aromatischen Kohlenwasserstoffen, halogenierte Kohlenwasserstoffe, sowie N-alkylierte Lactame. Beispielsweise eignen sich als Ketone Aceton, Methylethylketon, Diisobutylketon, Acetylaceton, Mesityloxid, Cyclohexanon und Methylcyclohexanon; als Ester Acetate, wie Ethylacetat, Propylacetat und Butylacetat, Formiate, Propionate und Malonate wie Diethylmalonat; als Ether Dialkylether, wie Diisopropylether, Diethylether, Dibutylether, Diethylenglykoldiethylether und Ethylenglykoldiethylether, Ketonether und Esterether; als aliphatische und aromatische Kohlenwasserstoffe Toluol, Xylol, Heptan, Octan und Erdölfraktionen, wie Naphtha, White Spirit, Petrolether und Benzin; halogenierte Kohlenwasserstoffe, wie Methylenchlorid; sowie N-alkylierte Lactame, wie N-Methylpyrrolidon.

Bevorzugte Lösungsmittel sind Xylol, Toluol, White Spirit und Erdölfraktionen im Siedebereich von 100 °C bis 200 °C.

Geeignete Mengen Lösungsmittel liegen typischerweise im Bereich von 0.5 bis 20 Gew.-%, insbesondere 1 bis 10 Gew.-%, bezogen auf die gesamte Zusammensetzung.

Vorteilhaft enthält die Zusammensetzung mindestens einen Weichmacher. Insbesondere sind solche Weichmacher Ester organischer Carbonsäuren oder deren Anhydride, zum Beispiel Phthalate wie Dioctylphthalat, Diisononylphthalat oder Diisodecylphthalat, Adipate wie Dioctyladipat, Azelate und Sebacate; organische Phosphor- und Sulfonsäureester, Polybutene und Polyisobutene.

In der Zusammensetzung können weitere Bestandteile vorhanden sein. Weitere Bestandteile sind insbesondere Hilfs- und Zusatzstoffe wie:
- Katalysatoren, wie sie in der Polyurethanchemie üblich sind, insbesondere Zinn- und Wismutverbindungen;
- Fasern, beispielsweise aus Polyethylen;
- Pigmente, beispielsweise Titandioxid oder Eisenoxide;
- Rheologie-Modifizierer, wie beispielsweise Verdickungsmittel oder Thixotropiermittel, insbesondere Harnstoffverbindungen, Polyamidwachse, Bentonite oder pyrogene Kieselsäuren;
- Reaktivverdünner oder Vernetzer, beispielsweise niedrigmolekulare Oligomere und Derivate von Diisocyanaten wie MDI, PMDI, TDI, HDI, 1,12-Dodecamethylendiisocyanat, Cyclohexan-1,3-diisocyanat oder Cyclohexan-1,4-diisocyanat, IPDI, Perhydro-2,4'-diphenylmethandiisocyanat und Perhydro-4,4'-diphenylmethandiisocyanat, 1,3- und 1,4-Tetramethylxylylendiisocyanat, insbesondere Isocyanurate, Carbodiimide, Uretonimine, Biurete, Allophanate und Iminooxadiazindione der genannten Diisocyanate, Addukte von Diisocyanaten mit kurzkettigen Polyolen, Adipinsäuredihydrazid und andere Dihydrazide, sowie blockierte Härter in Form von Polyaldiminen, Polyketiminen, Oxazolidinen oder Polyoxazolidinen;
- Trocknungsmittel, wie beispielsweise Molekularsiebe, Calciumoxid, hochreaktive Isocyanate wie p-Tosylisocyanat, Orthoameisensäureester, Alkoxysilane wie Tetraethoxysilan, Organoalkoxysilane wie Vinyltrimethoxysilan, und Organoalkoxysilane, welche in α-Stellung zum Siliciumatom eine funktionelle Gruppe aufweisen;
- Haftvermittler, insbesondere Silane, wie beispielsweise Vinylsilane, (Meth)acrylsilane, Isocyanatosilane, Carbamatosilane, S-(Alkylcarbonyl)-mercaptosilane und Aldiminosilane, oligomere Formen dieser Silane, sowie Addukte von Amino- und Mercaptosilanen mit Polyisocyanaten;
- nicht-reaktive thermoplastische Polymere, wie beispielsweise Homo- oder Copolymere von ungesättigten Monomeren, insbesondere von ungesättigten Monomeren, welche ausgewählt sind aus der Gruppe umfassend Ethylen, Propylen, Butylen, Isobutylen, Isopren, Vinylacetat oder höhere Ester davon, und (Meth)acrylat, wobei Ethylenvinylacetat-Copolymere (EVA), ataktische Poly-α-Olefine (APAO), Polypropylene (PP) und Polyethylene (PE);
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide, wie beispielsweise Algizide, Fungizide oder das Pilzwachstum hemmende Substanzen;
sowie weitere, üblicherweise in Polyurethanzusammensetzungen eingesetzte Substanzen.

Es ist vorteilhaft, alle der genannten, in der Zusammensetzung gegebenenfalls vorhandenen Bestandteile so auszuwählen, dass die Lagerstabilität der Zusammensetzung durch die Anwesenheit eines solchen Bestandteils nicht beeinträchtigt wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Isocyanatgruppen, während der Lagerung nicht in signifikantem Ausmass auftreten sollen. Es ist deshalb insbesondere von Vorteil, dass die genannten Bestandteile kein, oder höchstens Spuren von, Wasser enthalten oder beim Lagern freisetzen. Es kann deshalb sinnvoll und angebracht sein, gewisse Bestandteile vor dem Einmischen in die Zusammensetzung chemisch oder physikalisch zu trocknen.

Die beschriebene Zusammensetzung wird vorzugsweise unter Ausschluss von Feuchtigkeit aufbewahrt. Dadurch bleibt die Zusammensetzung lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität, der Auspressmenge oder der Auspresskraft ermittelt.

Die Aushärtung der Zusammensetzung erfolgt dadurch, dass die Zusammensetzung bei der Applikation in Kontakt mit Wasser gelangt. Die Aushärtungsreaktion wird auch als Vernetzung bezeichnet.

Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Im ausgehärteten Zustand verfügt die Zusammensetzung über eine hohe mechanische Festigkeit bei einer hohen Dehnbarkeit sowie über gute Haftungseigenschaften auch nach starker Belastung mit Feuchtigkeit. Dadurch eignet sie sich für eine Vielzahl von Anwendungen, insbesondere als elastischer Klebstoff, als elastischer Dichtstoff oder als elastische Beschichtung. Insbesondere eignet sich die Zusammensetzung für Anwendungen, welche eine hohe Aushärtungsgeschwindigkeit erfordern und hohe Anforderungen an die Festigkeit und die Früh- und Endfestigkeit sowie Dehnbarkeit stellen, bei gleichzeitig hohen Anforderungen an die Haftungseigenschaften. Speziell geeignet ist sie für Anwendungen, bei welchen eine Belastung der ausgehärteten Zusammensetzung mit Feuchtigkeit vorliegt, insbesondere mit einer Kombination aus Wärme und Feuchtigkeit.

Die beschriebene Zusammensetzung eignet sich besonders als Kleb-oder Dichtstoff oder als Beschichtung, insbesondere als elastischer Kleb- oder Dichtstoff.

Bevorzugt eignet sich die beschriebene Zusammensetzung zum Verglasen von Transportmitteln, insbesondere von Fahrzeugen zu Wasser oder zu Lande, bevorzugt von Automobilen, Bussen, Lastkraftwagen, Zügen oder Schiffen, meist bevorzugt von Automobilen.

Weiterhin bevorzugt eignet sich die beschriebene Zusammensetzung zum Verkleben, Abdichten und/oder Beschichten in Bau- und Industrieanwendungen, insbesondere zum Abdichten von Gebäuden oder Bauwerken des Hoch- und Tiefbaus sowohl im Innen- als auch im Aussenbereich.

Die beschriebene Zusammensetzung kann sowohl bei Raumtemperatur als auch bei erhöhter Temperatur, als Warmschmelz- (Warm Melt) oder als Heissschmelzzusammensetzung (Hot Melt), eingesetzt werden. Die unterschiedliche Konsistenz und die unterschiedlichen Eigenschaften im nicht ausgehärteten sowie im ausgehärteten Zustand ergeben sich dabei entsprechend der in der Zusammensetzung enthaltenen Inhaltsstoffe und deren Mengen.

In einer Ausführungsform weist die Zusammensetzung beispielsweise bei Raumtemperatur eine pastöse Konsistenz mit strukturviskosen Eigenschaften auf und ist typischerweise geeignet als Kleb- und/oder Dichtstoff, insbesondere als elastischer Kleb- oder Dichtstoff.

In einer anderen Ausführungsform weist die Zusammensetzung bei Raumtemperatur eine flüssige Konsistenz mit guten Verlaufeigenschaften auf. Dadurch lässt sie sich einfach als selbstverlaufende Beschichtung auf überwiegend ebene Flächen applizieren, beispielsweise als Bodenbelag.

In einer weiteren Ausführungsform weist die Zusammensetzung ein bei Raumtemperatur festes Polyurethanpolymer P, beziehungsweise eine bei Raumtemperatur feste Schmelzkomponente auf, welche vorzugsweise ein, wie vorhergehend beschriebenes, reaktives oder ein nicht-reaktives thermoplastisches Polymer ist. In Abhängigkeit der Schmelztemperatur dieser festen Komponenten wird die Zusammensetzung typischerweise als Warmschmelzzusammensetzung, d. h. bei einer Temperatur zwischen 40 °C und 80 °C, beziehungsweise als Heissschmelzzusammensetzung, d. h. bei einer Temperatur > 80 °C, insbesondere von über ≥ 100 °C eingesetzt. In beiden Fällen liegt die Applikationstemperatur oberhalb des Schmelzpunktes der genannten festen Komponenten. Dadurch erfolgt die Aushärtung der Zusammensetzung durch zwei Vorgänge. Einerseits verfestigt sich die Zusammensetzung beim Abkühlen, indem die geschmolzene feste Komponente erstarrt, insbesondere durch Kristallisation, und sich dadurch die Viskosität der Zusammensetzung stark erhöht. Parallel dazu und/oder anschliessend daran erfolgt die chemische Aushärtung der Zusammensetzung mittels Feuchtigkeit, verbunden mit der Ausbildung der Endfestigkeit, wie bereits beschrieben.

Weiterhin umfasst die Erfindung ein Verfahren der Verklebung von Substraten S1 und S2. Ein solches Verfahren umfasst die Schritte
i) Applikation einer Zusammensetzung gemäss vorhergehender Beschreibung auf ein Substrat S1 und/oder ein Substrat S2;
ii) Kontaktieren der Substrate S1 und S2 über die applizierte Zusammensetzung;
iii) Aushärtung der Zusammensetzung mittels Wasser, insbesondere in der Form von Luftfeuchtigkeit;
wobei die Substrate S1 und S2 gleich oder verschieden voneinander sind.

Weiterhin umfasst die Erfindung auch ein Verfahren der Abdichtung oder der Beschichtung umfassend die Schritte
i') Applikation einer Zusammensetzung gemäss vorhergehender Beschreibung an einem Substrat S1 oder zwischen ein Substrat S1 und ein Substrat S2;
ii') Aushärtung der Zusammensetzung mittels Wasser, insbesondere in der Form von Luftfeuchtigkeit;
wobei die Substrate S1 und S2 gleich oder verschieden voneinander sind.

Betreffend der Schritte iii) oder ii') der chemischen Aushärtung der Zusammensetzung mit Feuchtigkeit versteht der Fachmann, dass die Aushärtungsreaktion, in Abhängigkeit von Faktoren wie der verwendeten Zusammensetzung, der Substrate, der Temperatur, der Umgebungsfeuchtigkeit und der Klebegeometrie, bereits während der Applikation der Zusammensetzung beginnen kann. Der Hauptteil der chemischen Aushärtung findet im Allgemeinen jedoch nach der Applikation der Zusammensetzung statt.

Als Substrate S1 und/oder S2 eignen sich insbesondere Substrate, welche ausgewählt sind aus der Gruppe bestehend aus Glas, Keramik, Glaskeramik, Beton, Mörtel, Backstein, Ziegel, Gips, Naturstein wie Granit oder Marmor, Holz, Metall oder Metalllegierung wie Aluminium, Stahl, Buntmetall oder verzinktes Metall, Kunststoff wie PVC, Polycarbonat, PMMA, Polyester oder Epoxidharz, Pulverbeschichtung, Farbe oder Lack, insbesondere Automobildecklack.

Bevorzugt ist mindestes eines der Substrate S1 oder S2 Glas oder Keramik, insbesondere Glaskeramik.

Meist bevorzugt sind die Substrate S1 eine Fensterscheibe und S2 ein Metall oder eine Metalllegierung, insbesondere ein lackiertes Metall oder eine lackierte Metalllegierung, wie sie in der Fertigung von Transportmitteln, insbesondere Fahrzeugen zu Wasser oder zu Lande, bevorzugt Automobilen, Bussen, Lastkraftwagen, Zügen oder Schiffen, meist bevorzugt Automobilen, eingesetzt werden.

Falls die Zusammensetzung als Klebstoff für elastische Verklebungen verwendet wird, weist sie bevorzugt eine pastöse Konsistenz mit strukturviskosen Eigenschaften auf. Ein solcher Klebstoff wird mittels einer geeigneten Vorrichtung auf das Substrat aufgetragen, bevorzugt in Form einer Raupe, wobei diese vorteilhaft eine im Wesentlichen runde oder dreieckige Querschnittsfläche aufweist. Geeignete Methoden zum Auftragen des Klebstoffes sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Ein Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Erfindungsgemässe Zusammensetzungen weisen insbesondere auch ohne die Verwendung von Haftvermittlerzusammensetzungen, auch Primer genannt, eine gute Haftung auf Glas und keramischen Substraten auf. Weiterhin weisen sie eine gute Tieftemperaturaushärtung auf.

Weiterhin umfasst die vorliegende Erfindung einen mit einer beschriebenen Zusammensetzung verklebten, abgedichteten und/oder beschichteten Artikel, welcher durch eines der beschriebenen Verfahren erhalten wird.

Bei diesen Artikeln handelt es sich vorzugsweise um ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff. Bevorzugt sind solche Artikel auch Anbauteile eines Transportmittels, insbesondere auch Modulteile, welche an der Fertigungslinie als Module verwendet werden und insbesondere an- oder eingeklebt werden. Insbesondere werden diese vorgefertigten Anbauteile im Transportmittelbau eingesetzt. Beispielsweise sind derartige Anbauteile Führerkabinen von Lastkraftwagen oder von Lokomotiven oder Schiebedächer von Automobilen. Bevorzugt handelt es sich bei diesen Artikeln um Fensterscheiben von Transportmitteln, insbesondere um Fensterscheiben von Automobilen und Lastkraftwagen.

### Beispiele

### Herstellung eines Polyurethanpolymers P1

Das Polyurethanpolymer P1 wurde wie folgt hergestellt: 4000 g Polyoxypropylen-Diol (Acclaim^{®} 4200 N, Bayer; OH-Zahl 28.5 mg KOH/g) und 520 g 4,4'-Methylendiphenyldiisocyanat (MDI; Desmodur^{®} 44 MC L, Bayer) wurden bei 80 °C zu einem Isocyanatgruppen-terminierten Polyurethanpolymeren mit einem titrimetrisch bestimmten Gehalt an freien Isocyanatgruppen von 1.86 Gewichts-% umgesetzt.

### Herstellung der Polyurethanzusammensetzung

In einem Vakuummischer wurden 1320 g Polyurethanpolymer P, 330 g Diisodecylphthalat (DIDP; Palatinol^{®} Z, BASF, Deutschland), 15 g eines Silans, 300 g eines Harnstoff-Verdickungsmittels, dessen Herstellung unten im Detail beschrieben ist, 450 g Russ (getrocknet), 525 g calciniertes Kaolin (getrocknet) und 60 g eines tertiären Amins (2,2'-Dimorpholinodiethylether (DMDEE)) zu einer homogenen Paste verarbeitet, welche unter Ausschluss von Feuchtigkeit aufbewahrt wurde.

Als Silan wurde im Referenzbeispiel *Ref-1* 3-Glycidyloxypropyltrimethoxysilan (Dynasylan^{®} GLYMO, Degussa, Deutschland), in *Ref-2 S-*(Octanoyl)mercaptopropyltriethoxysilan (Gelest, Inc., USA) und im erfindungsgemässen Beispiel 3-(Triethoxysilyl)propylbernsteinsäureanhydrid (Geniosil^{®} GF 20, Wacker, Deutschland) eingesetzt.

Das Harnstoff-Verdickungsmittel wurde wie folgt hergestellt: In einem Vakuummischer wurden 1000 g Diisodecylphthalat (DIDP; Palatinol^{®} Z, BASF, Deutschland) und 160 g 4,4'-Methylendiphenyldiisocyanat (MDI; Desmodur^{®} 44 MC L, Bayer, Deutschland) vorgelegt und leicht aufgewärmt. Dann wurden unter starkem Rühren 90 g Monobutylamin langsam zugetropft. Die entstehende Paste wurde unter Vakuum und Kühlung eine Stunde weitergerührt.

### Testverfahren

### Bestimmung der Lagerstabilität

Die Bestimmung der Lagerstabilität der hergestellten Polyurethanzusammensetzungen erfolgte über die Messung der Auspresskraft *("APK").*

Für die Bestimmung der Auspresskraft wurden die Zusammensetzungen je in eine Kartusche gefüllt und während der in Tabelle 1 angegebenen Zeit und Temperatur gelagert und schliesslich nach Konditionierung während 12 Stunden bei 23 °C geöffnet. Eine Düse von 5 mm Innendurchmesser wurde aufgeschraubt. Mit einem Auspressgerät "Zwick 1120" wurde sodann die Kraft bestimmt, die benötigt wurde, um die Zusammensetzung mit einer Auspressgeschwindigkeit von 60 mm/min auszupressen. Der angegebene Wert ist ein Mittelwert aus den Kräften gemessen nach 22 mm, 24 mm, 26 mm und 28 mm. Nach 30 mm Auspressung wurde gestoppt.

### Bestimmung der Haftung

Zur Prüfung der Haftung wurde die Polyurethanzusammensetzung als Rundraupe mit einer Kartuschenpresse und einer Düse auf die Substrate aufgetragen. Dann wurde die Zusammensetzung zuerst während 7 Tagen bei einer Temperatur von 23 °C und einer relativen Luftfeuchtigkeit von 50% (Raumtemperatur-Klimalagerung: "KL") und dann während weiteren 7 Tagen bei 70 °C und 100% relativer Luftfeuchtigkeit (Cataplasma-Lagerung: "CL") ausgehärtet.

Danach wurden die ausgehärteten Raupen jeweils an einem Ende knapp über der Oberfläche des Plättchens (Klebefläche) eingeschnitten. Das eingeschnittene Ende der Raupe wurde von Hand festgehalten und dann vorsichtig und langsam, schälend in Richtung des anderen Raupenendes, von der Plättchenoberfläche gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Oberfläche des Plättchens angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe vom Plättchen gezogen bzw. geschnitten. Die Bewertung der Hafteigenschaften erfolgte anhand von der ausgehärteten Zusammensetzung, die nach dem Abziehen der Raupe auf der Substratoberfläche zurückgeblieben war (Kohäsionsbruch), und zwar durch Abschätzen des kohäsiven Anteils der Haftfläche. In den Testresultaten in Tabelle 1 ist der Anteil Kohäsionsbruch in Prozenten der gesamten Klebefläche angegeben. Kohäsionsbruchwerten von weniger als 75% gelten als ungenügend.

Die Haftung der Polyurethanzusammensetzungen wurde auf den folgenden Substraten ermittelt:
■ Glasprüfkörper von Rocholl Deutschland (Floatglas, auf der Luftseite getestet)
■ Glaskeramikprüfkörper Ferro 14279 (VSG) und Ferro 14251 (ESG) von Rocholl Deutschland
Die Substrate wurden vor der Applikation der Zusammensetzung mit einem Isopropanol/Wasser-Gemisch (2:1), gereinigt.

### Resultate

**Tabelle 1 Polyurethanzusammensetzungen und Resultate der Bestimmung der Lagerstabilität und der Haftung.**

| | *Ref-1* | | *Ref-2* | | *1* | |
|---|---|---|---|---|---|---|
| PUR-Polymer P1 [Gew.-%] | 44.0 | | 44.0 | | 44.0 | |
| DIDP [Gew.-%] | 12.5 | | 12.5 | | 12.5 | |
| Harnstoff-Verdickungsmittel [Gew.-%] | 10.0 | | 10.0 | | 10.0 | |
| 3-Glycidyloxypropyltrimethoxy- silan [Gew.-%] | 0.5 | | | | | |
| S-(Octanoyl)mercaptopropyl- triethoxysilan [Gew.-%] | | | 0.5 | | | |
| 3-(Triethoxysilyl)propylbern- steinsäureanhydrid [Gew.-%] | | | | | 0.5 | |
| Russ [Gew.-%] | 15.0 | | 15.0 | | 15.0 | |
| calciniertes Kaolin [Gew.-%] | 17.5 | | 17.5 | | 17.5 | |
| DMDEE [Gew.-%] | 0.5 | | 0.5 | | 0.5 | |
| Summe [Gew.-%] | 100 | | 100 | | 100 | |
| | | | | | | |
| *APK* 1 d RT [N] | 700 | | 700 | | 700 | |
| *APK7d* 60 °C [N] | 1500 | | 1200 | | 1000 | |
| *APK* 6mt RT [N] | durchgehärtet | | 1700 | | 1300 | |
| Haftung auf | KL | CL | KL | CL | KL | CL |
| Glas | 100% | 100% | <50% | <50% | 100% | 100% |
| Glaskeramik | 100% | 100% | <50% | <50% | 100% | 100% |

Die Resultate aus Tabelle 1 zeigen, dass die erfindungsgemässe Zusammensetzung eine sehr gute Lagerstabilität und gleichzeitig eine optimale Haftung auf Glas und Glaskeramik aufweist.

## Patentansprüche

1. Zusammensetzung enthaltend
a) mindestens ein Isocyanatgruppen aufweisendes Polyurethanpolymer P;
b) mindestens ein tertiäres Amin;
c) mindestens ein Silan der Formel (I) 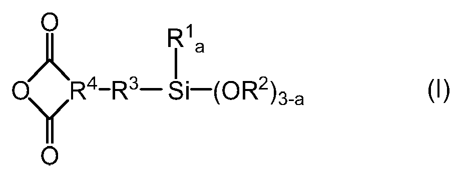
wobei
R¹ für eine Alkylgruppe mit 1 bis 8 C-Atomen, insbesondere für eine Methyl- oder für eine Ethylgruppe, steht;
R² für eine Alkylgruppe mit 1 bis 5 C-Atomen, insbesondere für eine Methyl- oder für eine Ethyl- oder für eine Isopropylgruppe, steht;
R³ für eine lineare oder verzweigte, gegebenenfalls cyclische, Alkylengruppe mit 1 bis 20 C-Atomen, gegebenenfalls mit aromatischen Anteilen, und gegebenenfalls mit Heteroatomen, insbesondere für eine Alkylengruppe mit 3 C-Atomen, steht;
R⁴ für einen dreiwertigen Kohlenwasserstoffrest mit 2 bis 5, insbesondere mit 2, C-Atomen steht; und
a für einen Wert von 0 oder 1, insbesondere für 0, steht.

2. Zusammensetzung gemäss Anspruch 1, **dadurch gekennzeichnet, dass**
R² für eine Methyl- oder für eine Ethylgruppe steht;
R³ für eine Alkylengruppe mit 3 C-Atomen steht;
R⁴ für einen dreiwertigen Kohlenwasserstoffrest mit 2 C-Atomen steht; und
a für einen Wert von 0 steht.

3. Zusammensetzung gemäss einem der vorhergehenden Ansprüche,
**dadurch gekennzeichnet, dass** das tertiäre Amin ausgewählt ist aus der Gruppe bestehend aus 1,4-Diazabicyclo[2.2.2]octan (DABCO), 1,8-Diazabicyclo[5.4.0]undec-7-en (DBU), 1,5-Diazabicyclo[4.3.0]non-5-en (DBN) und Dimorpholinoethern der Formel (II) 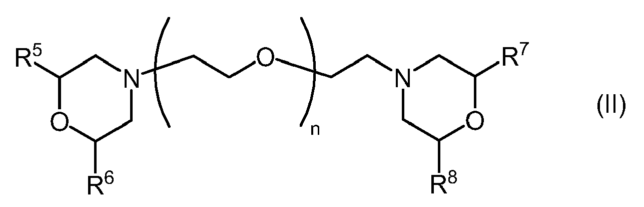 wobei
R⁵, R⁶, R⁷ und R⁸ unabhängig voneinander für Wasserstoffatome, Methyl- oder Ethylgruppen stehen und n für einen Wert von 1 bis 10, insbesondere von 1 bis 5 steht.

4. Zusammensetzung gemäss Anspruch 3, **dadurch gekennzeichnet, dass** das tertiäre Amin der Formel (II) 2,2'-Dimorpholinodiethylether (DMDEE) ist.

5. Zusammensetzung gemäss einem der vorhergehenden Ansprüche,
**dadurch gekennzeichnet, dass** das Silan der Formel (I) 3-(Trimethoxysilyl)propylbernsteinsäureanhydrid oder 3-(Triethoxysilyl)propylbernsteinsäureanhydrid und das tertiäre Amin 2,2'-Dimorpholinodiethylether (DMDEE) ist.

6. Zusammensetzung gemäss einem der vorangehenden Ansprüche,
**dadurch gekennzeichnet, dass** der Anteil des Silans der Formel (I) 0.05 bis 5 Gew.-%, insbesondere 0.1 bis 2.5 Gew.-%, der gesamten Zusammensetzung beträgt.

7. Zusammensetzung gemäss einem der vorhergehenden Ansprüche,
**dadurch gekennzeichnet, dass** der Anteil des tertiären Amins 0.05 bis 3 Gew.-%, insbesondere 0.1 bis 2 Gew.-%, der gesamten Zusammensetzung beträgt.

8. Zusammensetzung gemäss einem der vorhergehenden Ansprüche,
**dadurch gekennzeichnet, dass** die Zusammensetzung zusätzlich mindestens einen Weichmacher enthält.

9. Zusammensetzung gemäss einem der vorhergehenden Ansprüche,
**dadurch gekennzeichnet, dass** die Zusammensetzung zusätzlich mindestens einen Rheologie-Modifizierer, insbesondere eine Harnstoffverbindung oder eine pyrogene Kieselsäure, enthält.

10. Zusammensetzung gemäss einem der vorhergehenden Ansprüche,
**dadurch gekennzeichnet, dass** die Zusammensetzung zusätzlich mindestens einen Füllstoff, insbesondere industriell hergestellten Russ, enthält.

11. Verwendung der Zusammensetzung gemäss einem der Ansprüche 1 bis 10 als Klebstoff, Dichtstoff oder als Beschichtung, insbesondere als elastischer Kleb- oder Dichtstoff.

12. Verwendung gemäss Anspruch 11 zum Verglasen von Transportmitteln, insbesondere von Fahrzeugen zu Wasser oder zu Lande, bevorzugt von Automobilen, Bussen, Lastkraftwagen, Zügen oder Schiffen, meist bevorzugt von Automobilen.

13. Verwendung gemäss Anspruch 11 zum Verkleben, Abdichten und/oder Beschichten in Bau- und Industrieanwendungen, insbesondere zum Abdichten von Gebäuden oder Bauwerken des Hoch- und Tiefbaus.

14. Verfahren der Verklebung von Substraten S1 und S2 umfassend die Schritte
i) Applikation einer Zusammensetzung gemäss einem der Ansprüche 1 bis 10 auf ein Substrat S1 und/oder ein Substrat S2;
ii) Kontaktieren der Substrate S1 und S2 über die applizierte Zusammensetzung;
iii) Aushärtung der Zusammensetzung mittels Wasser, insbesondere in der Form von Luftfeuchtigkeit;
wobei die Substrate S1 und S2 gleich oder verschieden voneinander sind.

15. Verfahren der Abdichtung oder der Beschichtung umfassend die Schritte
i') Applikation einer Zusammensetzung gemäss einem der Ansprüche 1 bis 10 an einem Substrat S1 oder zwischen ein Substrat S1 und ein Substrat S2;
ii') Aushärtung der Zusammensetzung mittels Wasser, insbesondere in der Form von Luftfeuchtigkeit;
wobei die Substrate S1 und S2 gleich oder verschieden voneinander sind.

16. Verfahren gemäss Anspruch 14 oder 15, **dadurch gekennzeichnet, dass** der Zusammensetzung bei der Applikation zusätzlich eine Wasser enthaltende Komponente, insbesondere eine Wasser enthaltende Paste, zugemischt wird.

17. Verfahren gemäss einem der Ansprüche 14 bis 16, **dadurch gekennzeichnet, dass** mindestens eines der Substrate S1 oder S2 Glas oder Keramik, insbesondere Glaskeramik, ist.

18. Verfahren gemäss einem der Ansprüche 14 bis 17, **dadurch gekennzeichnet, dass** eines der Substrate S1 oder S2 insbesondere ausgewählt ist aus der Gruppe bestehend aus Glas, Keramik, Glaskeramik, Beton, Mörtel, Backstein, Ziegel, Gips, Naturstein wie Granit oder Marmor, Holz, Metall oder Metalllegierung wie Aluminium, Stahl, Buntmetall oder verzinktes Metall, Kunststoff wie PVC, Polycarbonat, PMMA, Polyester oder Epoxidharz, Pulverbeschichtung, Farbe oder Lack, insbesondere Automobildecklack.

19. Artikel, welcher nach einem Verfahren gemäss einem der Ansprüche 14 bis 18 verklebt, abgedichtet oder beschichtet wurde.

20. Artikel gemäss Anspruch 19, **dadurch gekennzeichnet, dass** der Artikel ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels, ist.
